# EUROPEAN PATENT APPLICATION

(11) **EP 4 436 219 A1**
(43) Date of publication of application: **25.09.2024**
(21) Application number: 22902984.8
(22) Date of filing: 30.09.2022
(51) Int. Cl.: H04W 4/029

(54) **THREE-DIMENSIONAL RECOGNITION DEVICE, TERMINAL, CALIBRATION METHOD, AND STORAGE MEDIUM**

(30) Priority: 07.12.2021 CN 202111516186
(71) Applicant: ZTE Corporation, Shenzhen, Guangdong 518057 (CN)
(72) Inventor: ZHANG, Yongliang, Shenzhen, Guangdong 518057 (CN)
(74) Representative: Betten & Resch
(86) International application number: PCT/CN2022/123544
(87) International publication number: WO 2023/103559

(57) **Abstract**

Provided in the present disclosure are a three-dimensional recognition device, a terminal, a calibration method and a storage medium. The three-dimensional recognition device comprises: an RGB assembly, which comprises an RGB camera (210) and a first lens (212), wherein a first light channel (211) is connected between the first lens (212) and the RGB camera (210); an infrared emission assembly, which comprises an infrared floodlight irradiator (310) and a second lens (312), wherein a second light channel (311) is connected between the infrared floodlight irradiator (310) and the second lens (312), and the second lens (312) is adjacent to the first lens (212); and an infrared receiving assembly, which comprises a first infrared camera (410) and a third lens (412), wherein a third light channel (411) is connected between the first infrared camera (410) and the third lens (412), and the third lens (412) is adjacent to the first lens (212).

## Description

### CROSS-REFERENCE TO RELATED APPLICATION

This application is based on and claims the priority to Chinese patent application No. 202111516186.2 filed on December 07, 2021, the disclosure of which is incorporated herein by reference in its entirety.

### TECHNICAL FIELD

The present disclosure relates to but is not limited to the field of smart terminal devices, in particular to a three-dimensional (3D) recognition device, a terminal device, a calibration method, and a storage medium.

### BACKGROUND

With the advancement of display screen technology, under-display cameras have gradually been applied to various smart terminal devices, gaining popularity among consumers. Because the lens is placed beneath the display screen, special treatments are needed to improve the light transmittance in the area corresponding to the lens, such as reducing Red Green Blue (RGB) pixels or scaling down RGB pixels to increase light transmission.

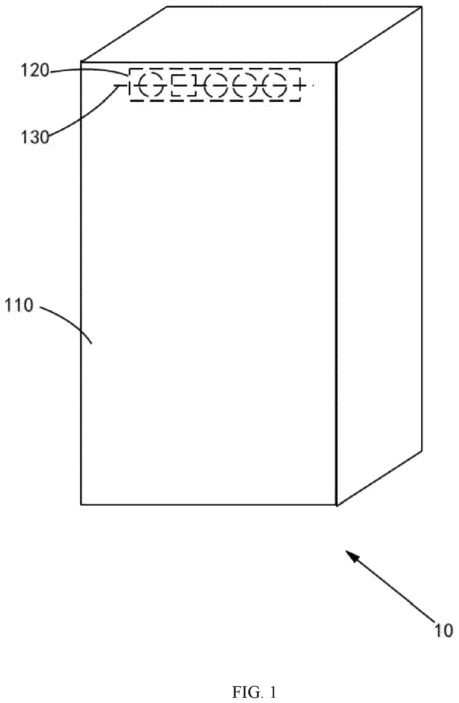

With the development of 3D recognition technology, smart terminal devices require not only front-facing RGB cameras on the display screen but also various 3D recognition devices. Currently, the numerous 3D recognition devices are generally arranged in parallel, as shown in FIG. 1. Consequently, a substantial area of the display screen needs to undergo special treatments to enhance light transmittance. However, due to variations in transparency, the treated area differs in display effect from other areas, impacting the user experience of full-screen display.

### SUMMARY

The following is a summary of the subject matters described in detail herein. This summary is not intended to limit the scope of protection of the appended claims.

Embodiments of the present disclosure provide a 3D recognition device, a terminal device, a calibration method, and a storage medium.

In accordance with a first aspect of the present disclosure, an embodiment provides a 3D recognition device arranged beneath a display screen of a terminal device, including: an RGB component, which includes an RGB camera, a first lens and a first light channel connecting the first lens and the RGB camera; an infrared emission component, which includes an infrared flood illuminator, a second lens and a second light channel connecting the infrared flood illuminator and the second lens, where the second lens is adjacent to the first lens; and an infrared receiving component, which includes a first infrared camera, a third lens and a third light channel connecting the first infrared camera and the third lens, where the third lens is adjacent to the first lens.

In accordance with a second aspect of the present disclosure, an embodiment provides a terminal device, including: the 3D recognition device as described in the first aspect; and a display screen, where the 3D recognition device is arranged beneath the display screen, and an area, corresponding to lenses of the 3D recognition device, of the display screen is a light transmittance enhancement area.

In accordance with a third aspect of the present disclosure, an embodiment provides a calibration method which is applied to a 3D recognition device. The 3D recognition device includes an RGB component, an infrared emission component and an infrared receiving component. The RGB component includes an RGB camera, a first lens and a first light channel connecting the first lens and the RGB camera. The infrared emission component includes an infrared flood illuminator, a second lens and a second light channel connecting the infrared flood illuminator and the second lens, where the second lens is adjacent to the first lens. The infrared receiving component includes a first infrared camera, a third lens and a third light channel connecting the first infrared camera and the third lens, where the third lens is adjacent to the first lens. The calibration method includes: in response to the infrared flood illuminator being in an operational mode, capturing a first image set via the first infrared camera and a second image set via the RGB camera according to a first preset time sequence, where the first infrared camera captures different target objects at different times, the RGB camera captures different target objects at different times, and the first infrared camera and the RGB camera capture the same target obj ect at the same time; performing calibration between the first infrared camera and the infrared flood illuminator according to the first image set; and fusing images captured at the same time in the first image set and the second image set to obtain a first fused image set, and performing calibration between the RGB camera and the first infrared camera according to the first fused image set.

In accordance with a fourth aspect of the present disclosure, an embodiment provides a terminal device, including: a memory, a processor, and a computer program stored in the memory and executable by the processor, where the processor implements the calibration method as described in the third aspect when executing the computer program.

In accordance with a fifth aspect of the present disclosure, an embodiment provides a computer-readable storage medium storing computer-executable instructions, where the computer-executable instructions are utilized to implement the calibration method as described in the third aspect.

Additional features and advantages of the present disclosure will be set forth in the subsequent description, and in part will become apparent from the description, or may be learned by practice of the present disclosure. The purposes and other advantages of the present disclosure can be realized and obtained by structures particularly noted in the description, the appended claims and the accompanying drawings.

### BRIEF DESCRIPTION OF DRAWINGS

The accompanying drawings are used to provide further understanding of the technical schemes of the present disclosure and constitute a part of the description. The accompanying drawings are used to explain the technical schemes of the present disclosure together with the embodiments of the present disclosure, and do not constitute a restriction on the technical schemes of the present disclosure.
FIG. 1 illustrates the layout of a 3D recognition device and an RGB camera for full-screen display in the existing technology;
FIG. 2 is a schematic diagram of a 3D recognition device according to an embodiment of the present disclosure arranged in a terminal device;
FIG. 3 is a sectional view of a 3D recognition device provided by the present disclosure;
FIG. 4 is a front view of a 3D recognition device provided by the present disclosure;
FIG. 5 illustrates the layout of Embodiment I of the present disclosure;
FIG. 6 illustrates the layout of Embodiment II of the present disclosure;
FIG. 7 illustrates the layout of Embodiment III of the present disclosure;
FIG. 8 is a flowchart of a calibration method applied to a 3D recognition device provided in Embodiment I of the present disclosure;
FIG. 9 is a flowchart of a calibration method applied to a 3D recognition device provided in Embodiment II of the present disclosure;
FIG. 10 is a flowchart of a calibration method applied to a 3D recognition device provided in Embodiment III of the present disclosure;
FIG. 11 is a flowchart of filtering laser speckle information according to another embodiment of the present disclosure;
FIG. 12 is a flowchart of global calibration according to another embodiment of the present disclosure;
FIG. 13 is an example diagram of a target object provided in the present disclosure; and
FIG. 14 is a schematic diagram of a terminal device according to another embodiment of the present disclosure.

### DETAILED DESCRIPTION

In order to make the objectives, technical schemes and advantages of the present disclosure more apparent, the present disclosure is further described in detail in conjunction with the accompanying drawings and embodiments. It should be understood that the particular embodiments described herein are only intended to explain the present disclosure, and are not intended to limit the present disclosure.

It is to be noted that although a functional module division is shown in a schematic diagram of a device and a logical order is shown in a flowchart, the steps shown or described may be executed, in some cases, with a different division of modules from that of the device or in a different order from that in the flowchart. The terms such as "first" and "second" in the description, claims or above-mentioned drawings are intended to distinguish between similar objects and are not necessarily to describe a specific order or sequence.

The present disclosure provides a 3D recognition device, a terminal device, a calibration method, and a storage medium. The 3D recognition device includes: an RGB component, which includes an RGB camera, a first lens and a first light channel connecting the first lens and the RGB camera; an infrared emission component, which includes an infrared flood illuminator, a second lens and a second light channel connecting the infrared flood illuminator and the second lens, where the second lens is adjacent to the first lens; and an infrared receiving component, which includes a first infrared camera, a third lens and a third light channel connecting the first infrared camera and the third lens, where the third lens is adjacent to the first lens. According to the technical scheme of the embodiment, the RGB camera, the infrared flood illuminator and the first infrared camera can be arranged separately from the lenses, and light propagation is realized through the light channels. This allows for a more compact arrangement of the plurality of lenses beneath the screen, effectively reducing the area which requires special treatments to enhance light transmittance. Consequently, the display effect and user experience of full-screen display are improved.

The embodiments of the present disclosure will be further explained below with reference to the accompanying drawings.

An embodiment of the present disclosure provides a 3D recognition device arranged beneath a display screen of a terminal device, including:
- an RGB component which includes an RGB camera 210 and a first lens 212, where the first lens 212 and the RGB camera 210 is connected through a first light channel 211;
- an infrared emission component which includes an infrared flood illuminator 310 and a second lens 312, where a second light channel 311 connects the infrared flood illuminator 310 and the second lens 312, and the second lens 312 is adjacent to the first lens 211;
- an infrared receiving component which includes a first infrared camera 410 and a third lens 412, where a third light channel 411 connects the first infrared camera 410 and the third lens 412, and the third lens 412 is adjacent to the first lens 212.

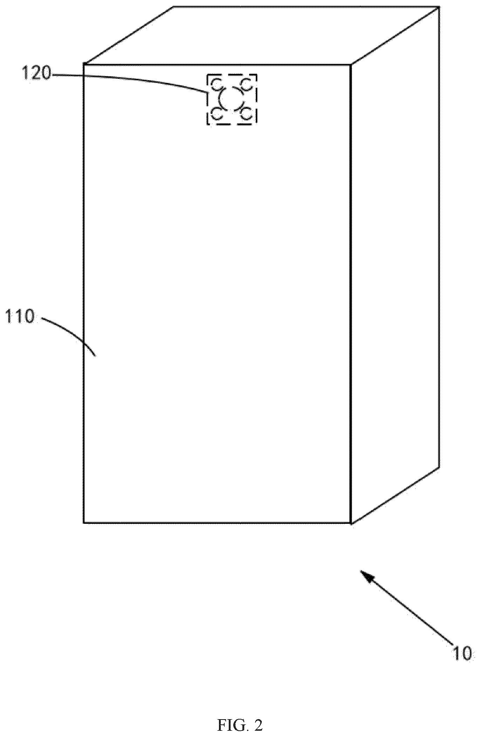

It should be noted that the common layout of 3D recognition devices, as depicted in FIG. 1, involves positioning the devices in parallel within the display screen 110 of the terminal device 10. The large size of a main body of the 3D recognition device and the distance between different lenses result in a large light transmittance enhancement area 120, which adversely affects full-screen display. By adopting the 3D recognition device provided in this embodiment, the separation of the main body of the 3D recognition device and the lenses can be realized. As shown in FIG. 2, a compact layout is achieved by considering only the dimensions of the lenses. The main body of the 3D recognition device is distributed inside the terminal device 10, and light propagation is realized through the light channels. The light transmittance enhancement area 120 can be effectively reduced, and user experience can be improved.

It is worth noting that the first lens 212 of the RGB camera 210 has a large size, while the lenses of the infrared emission component and the infrared receiving component are smaller, typically having small apertures. Therefore, as shown in FIG. 2, a plurality of small aperture lenses can be arranged around the first lens 212 to further improve the compactness of the layout.

It should be noted that, in this embodiment, the small aperture lenses are the second lens 312 and the third lens 412. Due to the high light transmittance required by the RGB camera 210, the apertures of the second lens 312 and the third lens 412 are smaller than the aperture of the first lens 212. Therefore, arranging the second lens 312 and the third lens 412 adjacent to the first lens 212 does not interfere with a main body of the RGB camera 210. The apertures of the second lens 312 and the third lens 412 can be adjusted according to the actual light input requirements, without specific size limitations.

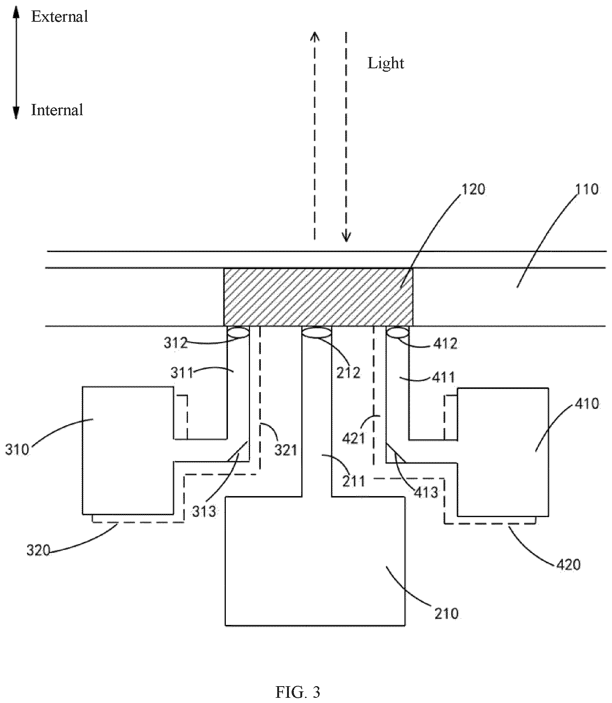

It should be noted that, referring to FIG. 3, the first light channel 211, the second light channel 311, and the third light channel 411 may have any shape as long as they ensure the entry or exit of light, without further restrictions.

The 3D recognition device will be described below through several embodiments.

### Embodiment I:

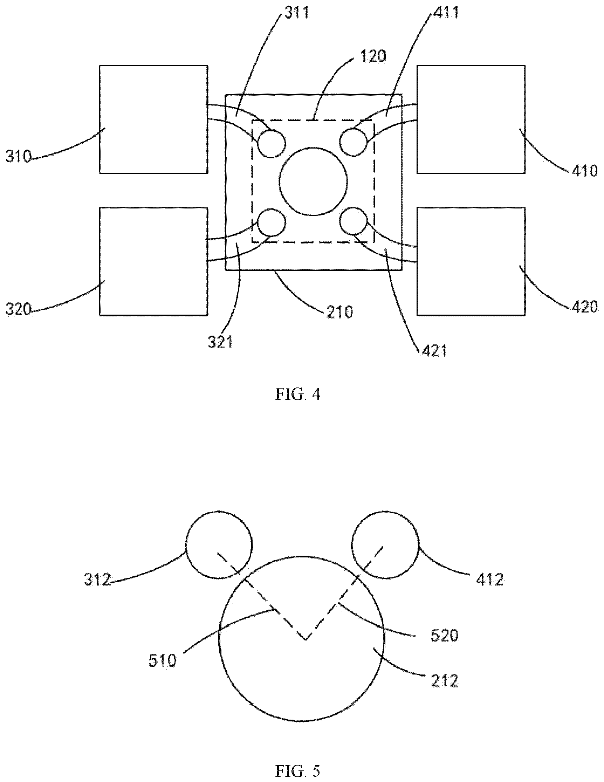

Please refer to FIG. 3 which is a cross-sectional view taken in a vertical direction with the terminal device positioned horizontally. When the RGB lens 210 is connected to the first lens 212 through the first light channel 211, there is a certain distance between the RGB lens 210 and the first lens 212. In order to achieve a compact layout, the second lens 312 and the third lens 412 can be arranged adjacent to the first lens 212 in a manner as shown in FIG. 5, that is, surrounding the first lens 212. The specific positions of the lenses can be adjusted according to actual requirements as long as there is no interference between them, which is not limited in this embodiment.

In this embodiment, main body sizes of the RGB camera 210, the infrared flood illuminator 310, and the first infrared camera 410 are larger than the corresponding lenses; and in a case where the light channels are all linear channels, in order to realize the lens layout shown in FIG. 5, a long first light channel 211 is required to ensure that the infrared flood illuminator 310 and the first infrared camera 410 do not interfere with the RGB camera 210, which will lead to an increase in the thickness of the terminal device. Therefore, in this embodiment, the second light channel 311 and the third light channel 411 both adopt the right-angle structure shown in FIG. 3, a first reflector 313 is arranged at a corner of the second light channel 311, and a second reflector 413 is arranged at a corner of the third light channel 411. The infrared light propagation direction can be changed by the reflectors. This enables the infrared flood illuminator 310 and the first infrared camera 410 to be horizontally staggered with the RGB camera 210. The resulting internal layout can be seen in FIG. 4 which shows a front view. In this way, the longitudinal space required by the 3D recognition device is effectively reduced, and the thickness of the 3D recognition device is effectively reduced.

It is worth noting that, with the structure of this embodiment, 3D recognition can be realized by using Time of Flight (TOF). Based on this, a high-power vertical cavity surface emitting laser (VCSEL) is adopted for the infrared flood illuminator 310, and the interior of the first infrared camera 410 can be adjusted according to actual needs to achieve accurate TOF collection. This embodiment does not impose additional restrictions on the internal structure of the device.

### Embodiment II:

On the basis of Embodiment I, the infrared emission component in this embodiment further includes an infrared dot projector 320 and a fourth lens 322, a fourth light channel 321 connects the infrared dot projector 320 and the fourth lens 322, and the fourth lens 322 is adjacent to the first lens 212; and a third reflector (not shown in the figure) is further arranged in the fourth light channel 321 for reflecting infrared light emitted by the infrared dot projector 320 to the fourth lens. The setup principles for the infrared dot projector 320, the fourth lens 321, the fourth light channel 321, and the third reflector can be understood by referencing the configuration of the infrared flood illuminator 310, the second lens 312, the second light channel 311, and the first reflector 313, which will not be repeated herein for the sake of simplicity of description.

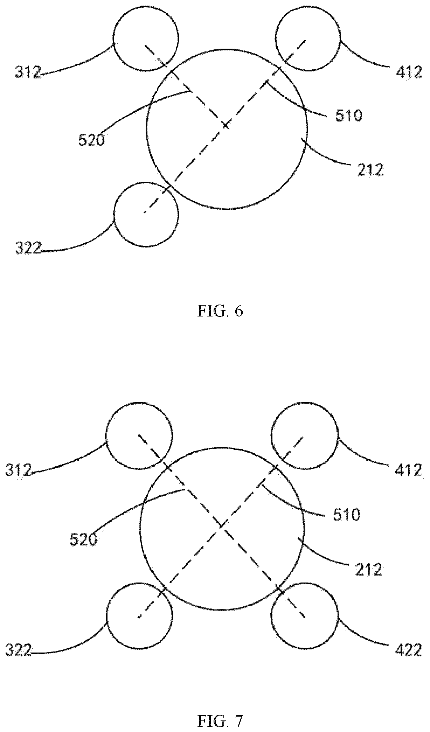

It should be noted that, referring to FIGS. 4 and 6, the fourth lens 322, the second lens 312, and the third lens 412 are arranged around the first lens 311, and the specific positions can be adjusted according to actual needs, which is not limited in this embodiment.

It is worth noting that in Embodiment I, to achieve TOF 3D recognition, a high-power VCSEL is used for the infrared flood illuminator 310. In contrast, this embodiment adopts a monocular structured light scheme, allowing for the use of a lower-power VCSEL for the infrared flood illuminator 310. The infrared dot projector 320 employs a high-power VCSEL for laser speckle transmission. Furthermore, compared to Embodiment I, the structure of the first infrared camera 410 is simplified. The internal structure of the device will not be detailed herein.

### Embodiment III:

On the basis of Embodiment II, the infrared receiving component in this embodiment includes a second infrared camera 420 and a fifth lens 422, a fifth light channel 421 connects the second infrared camera 420 and the fifth lens 422, and the fifth lens 422 is adjacent to the first lens 212; and a fourth reflector (not shown in the figure) is further arranged in the fifth light channel 421 for reflecting light entering through the fifth lens 422 to the second infrared camera 420. The setup principles for the second infrared camera 420, the fifth lens 422, the fifth light channel 421, and the fourth reflector can be understood by referencing the configuration of the first infrared camera 410, the third lens 412, the third light channel 411, and the second reflector, which will not be repeated herein for the sake of simplicity of description.

It should be noted that, referring to FIGS. 4 and 7, the fifth lens 422, the fourth lens 322, the second lens 312, and the third lens 412 are arranged around the first lens 311, and the specific positions can be adjusted according to actual needs, which is not limited in this embodiment.

It is worth noting that Embodiment II achieves 3D recognition with monocular structured light, while the addition of the second infrared camera 420 facilitates binocular structured light 3D recognition in this embodiment. The specific device parameters can be selected according to actual needs, with no further restrictions herein.

According to the 3D recognition device described in the above three embodiments, the main body of the recognition device can be arranged in the internal space of the terminal device, and the light transmittance enhancement area 120 can be effectively reduced, thereby reducing the display area affected by the light transmittance enhancement area 120. This enhances the overall display effect of the terminal device, leading to an improved user experience.

Further, with reference to FIG. 2, an embodiment of the present disclosure also provides a terminal device 10, including:
- the 3D recognition device as described in the above embodiment; and
- a display screen 110, the 3D recognition device being arranged beneath the display screen 110, and an area, corresponding to lenses of the 3D recognition device, of the display screen 110 being a light transmittance enhancement area 120.

It should be noted that, as described in Embodiments I to III, the number of lenses of the 3D recognition device depends on the scheme of the 3D recognition device. Referring to FIG. 4 which depicts the layout of the 3D recognition device corresponding to Embodiment III, to realize TOF 3D recognition using the structure of Embodiment I, the infrared dot projector 320, the second infrared camera 420, and the corresponding light channel and reflector can be eliminated on the basis of FIG. 4. In this way, the light transmittance enhancement area 120 can be further reduced on the basis of FIG. 4. The specific size of the light transmittance enhancement area 120 can be adjusted according to the number of lenses corresponding to the structure required for 3D recognition.

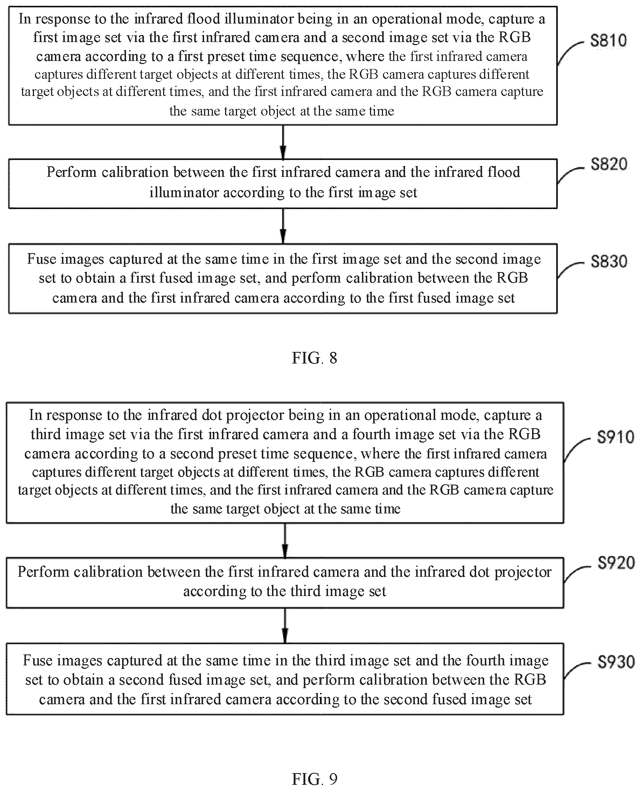

Further, with reference to FIG. 8, the present disclosure provides a calibration method applied to the 3D recognition device provided in Embodiment I, and the calibration method includes, but is not limited to, the following steps.

At S810, with the infrared flood illuminator in an operational mode, a first image set is captured via the first infrared camera and a second image set is captured via the RGB camera according to a first preset time sequence, where the first infrared camera captures different target objects at different times, the RGB camera captures different target objects at different times, and the first infrared camera and the RGB camera capture the same target object at the same time.

At S820, calibration between the first infrared camera and the infrared flood illuminator is performed according to the first image set.

At S830, images captured at the same time in the first image set and the second image set are fused to obtain a first fused image set, and calibration between the RGB camera and the first infrared camera is performed according to the first fused image set.

It should be noted that in the conventional arrangement layout shown in FIG. 1, baselines 130 between multiple lenses coincide, allowing for direct calibration of multiple optical sensor components. However, as shown in FIG. 5, due to the adjacency of the second lens 312 and the third lens 412 to the first lens 212, a first baseline 510 between the second lens 312 and the first lens 212 and a second baseline 520 between the third lens 412 and the first lens 212 cannot be guaranteed to lie on the same line. Therefore, based on the structure of the 3D recognition device in the embodiment of the present disclosure, pairwise calibration is required between optical sensor components. That is, calibration is performed between the first infrared camera 410 and the RGB camera 210, and between the infrared flood illuminator 310 and the RGB camera 210, so as to ensure proper calibration and mutual coordination of multiple optical sensor components which are not arranged in parallel.

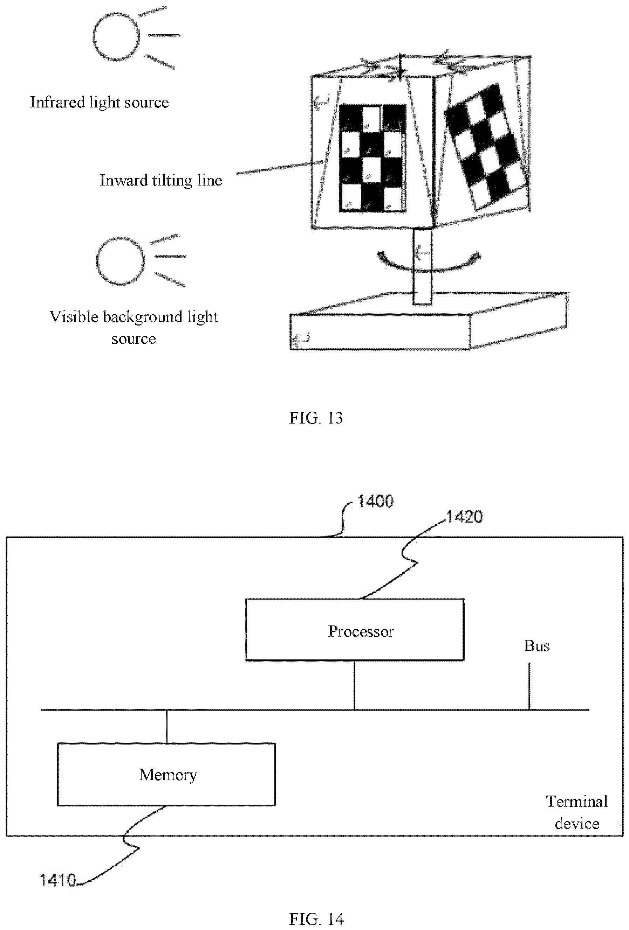

It should be noted that in the calibration process of the optical sensor components, a target object is often represented by a calibration object with distinct contrasting features, such as a checkerboard pattern or circular dot pattern. Additionally, the same pattern can be captured by the optical sensor components from different perspectives. For instance, in this embodiment, the calibration object depicted in FIG 13 can serve as the target object. This target object has four sides, each featuring the same checkerboard pattern, with the angles of the pattern on each side differing. Thus, capturing images from different sides results in different image contents. Further, the target object shown in FIG. 13 can also be equipped with a mechanical device to realize forward tilting or backward tilting of each side under command control, thereby capturing images from more diverse angles. in a case of using the target object shown in FIG. 13, a background infrared light source and a background visible light source can be added according to actual needs to ensure sufficient light, which will not be described in detail herein.

It should be noted that the 3D recognition device can be fixed, and the RGB camera 210 faces the target object squarely. Since the first lens 212 is adjacent to the second lens 312 and the third lens 412, and has a small aperture, it can be regarded as directly facing the calibration obj ect.

It is worth noting that the first preset time sequence is the time interval between two consecutive image captures, and in order to achieve automatic image capturing, the first preset time sequence can be synchronized with the rotation cycle of the target object. For example, if the target object takes 2 seconds to rotate from one side to another for each side to be photographed, the first preset time sequence can be 0 second, 2 seconds, 4 seconds, etc. Those having ordinary skill in the art can set corresponding parameters to ensure that two devices cooperate to complete the image capturing.

It should be noted that in order to determine calibration parameters, a plurality of images need to be captured by the first infrared camera 410 and the RGB camera 210, and the specific number can be determined according to the number of homography matrices corresponding to the number of intrinsic parameters to be solved in the calibration parameters. For example, if the number of intrinsic parameters to be solved is n, then n (if n is even) or n+1 (if n is odd) equations solvable via the least squares method need to be solved. In this case, the number of homography matrices is n/2 (if n is even) or (n+1)/2 (if n is odd), and in the subsequent round, the required number of photographs for the target object with varying tilt angles can be established as n/2 (if n is even) or (n+1)/2 (if n is odd). Of course, the number of image captures can also be increased according to actual needs, as long as calibration is realized, which is not limited herein.

It is worth noting that the image reflected back by the infrared flood illuminator 310 is a 2D image. The plane equation of the target object in the camera coordinates can be estimated from this 2D image. Subsequently, the laser point cloud from the infrared flood illuminator 310 can be associated with this plane. By converting the laser point cloud to the camera coordinate system through the mapping relationship between the laser coordinate system and the camera coordinate system, the minimum distance from each point in the laser point cloud to the plane can be calculated. The value of the minimum distance can then be solved using the least squares method to establish calibration. The above calibration method is just an example. On the basis of the first image set, the calibration between the first infrared camera 410 and the RGB camera 210 may also be realized in other ways, which will not be limited herein.

It is worth noting that the images in the first image set and the second image set are captured by different devices at the same time, so the images captured at the same time can be fused. On the basis of the first fused image set, those having ordinary skill in the art are familiar with the calibration process for the RGB camera 210. Techniques like Zhang Zhengyou calibration method, OpenCV, and Matlab are commonly utilized to compute intrinsic parameters and distortion coefficients, which will not be described in detail herein.

Referring to FIG. 9, the calibration method of the present disclosure can also be applied to the 3D recognition device provided in Embodiment II, and further includes but is not limited to the following steps.

At S910, with the infrared dot projector in an operational mode, a third image set is captured via the first infrared camera and a fourth image set is captured via the RGB camera according to a second preset time sequence, where the first infrared camera captures different target objects at different times, the RGB camera captures different target objects at different times, and the first infrared camera and the RGB camera capture the same target object at the same time.

At S920, calibration between the first infrared camera and the infrared dot projector is performed according to the third image set.

At S930, images captured at the same time in the third image set and the fourth image set are fused to obtain a second fused image set, and calibration between the RGB camera and the first infrared camera is performed according to the second fused image set.

It should be noted that in a case of having two infrared emission devices, it is possible to capture images of the third image set after completing the image capture for the first image set. Of course, the infrared flood illuminator 310 and the infrared dot projector 320 can be activated alternately for the purpose of improving efficiency, that is, the images of the first image set and the images of the third image set can be alternately photographed. The specific working mode can be selected based on timing requirements, with no further constraints specified herein.

It is worth noting that the image capturing method and principles of the fourth image set can be understood by referencing the image capturing method and principles of the second image set in the embodiment shown in FIG. 8 and will not be repeated herein.

It is worth noting that the alternating operation of the infrared dot projector 320 and the infrared flood illuminator 310 can prevent the laser speckles of the infrared dot projector 320 from interfering with the infrared light emitted by the infrared flood illuminator 310.

It is worth noting that the acquisition method of the second fused image set and the method for calibration between the RGB camera 210 and the first infrared camera 410 can be understood by referencing the description of the embodiment shown in FIG. 8, and will not be repeated herein.

It should be noted that, in this embodiment, the infrared light emitted by the infrared dot projector 320 is in the form of laser speckles. The first infrared camera 410 receives a plurality of 3D laser speckle images reflected from the target object irradiated by the infrared dot projector 320. Subsequently, the 3D laser speckle images are correlated to the 2D images of the first infrared camera 410 and converted accordingly. This conversion process introduces homogeneous coordinates to realize the conversion from 3D spatial points to 2D images, facilitating translation and rotation operations on each point. Consequently, multiple sets of plane equations of the target object in the camera coordinates are derived, optimizing the distance error between points and planes to achieve calibration.

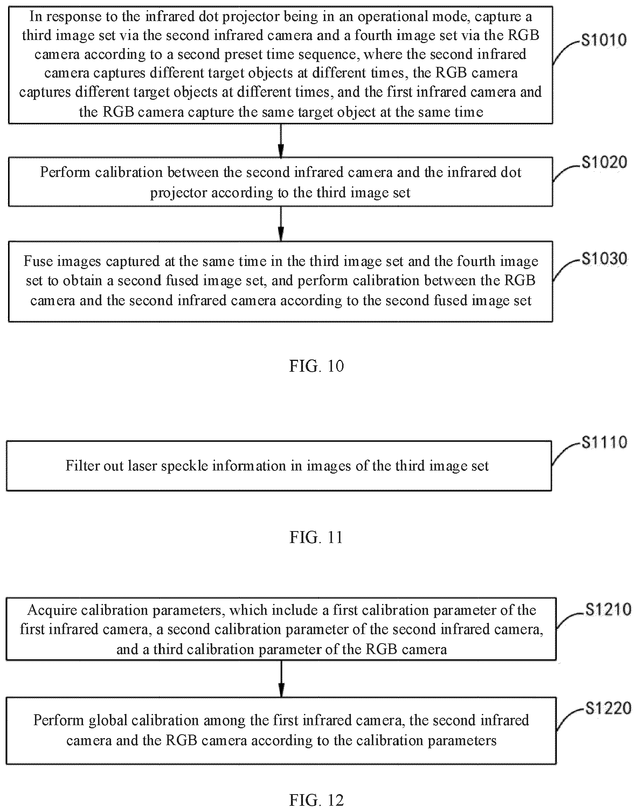

Referring to FIG. 10, the calibration method of the present disclosure can also be applied to the 3D recognition device provided in Embodiment III, and further includes but is not limited to the following steps.

At S1010, with the infrared dot projector in an operational mode, a third image set is captured via the second infrared camera and a fourth image set is captured via the RGB camera according to a second preset time sequence, where the second infrared camera captures different target objects at different times, the RGB camera captures different target objects at different times, and the first infrared camera and the RGB camera capture the same target object at the same time.

At S1020, calibration between the second infrared camera and the infrared dot projector is performed according to the third image set.

At S 1030, images captured at the same time in the third image set and the fourth image set are fused to obtain a second fused image set, and calibration between the RGB camera and the second infrared camera is performed according to the second fused image set.

It should be noted that the technical principles of this embodiment can be understood by referencing the principles of the embodiment shown in FIG. 9, except that the third image set is captured by the second infrared camera 420, that is, the first infrared camera 410 cooperates with the infrared flood illuminator 310, and the second infrared camera 420 cooperates with the infrared dot projector 320. Of course, the cooperation relationship can also be changed, which is not limited herein.

It should be noted that, in addition to the above differences, the first image set can also be obtained by having the first infrared camera 410 and the second infrared camera 420 each capturing an image while the infrared flood illuminator 310 is operating. This process yields two usable images which are cross-referenced, thereby enhancing the efficiency of both image capture and calibration. Similar procedures can be applied to the third image set, which will not be repeated herein.

It is worth noting that after the calibration between the first infrared camera 410 and the RGB camera 210 is completed according to the first fused image set, the calibration between the second infrared camera 420 and the RGB camera 210 needs to be performed according to the second fused image set. Since the baselines of different optical sensor components are not on the same line, pairwise calibration is necessary, so as to ensure the normal operation of the 3D recognition device.

It is worth noting that in a case where two infrared cameras and two infrared emitters are provided and the infrared dot projector 320 and the infrared flood illuminator 310 need to work alternately, according to the description of the above embodiment, the target object rotates according to the preset time sequence, that is, the capture of the first image set and the second image set is completed for a first side, and the capture of the third image set and the fourth image set is completed for a second side. Even if the tilt angle of the photographed side of the target object can be adjusted by using mechanical devices, there is difficulty in ensuring that the images captured after one rotation of the target object are enough. In this case, after one rotation, the target object can undergo an additional 90-degree rotation on the basis of the first rotation in the next round. That is, the capture of the first image set and the second image set is performed for the second side, to ensure that images in each image set differ from those captured in the first round.

Of course, if the number of images captured in the second round is still insufficient, the target object can be rotated for the third round at uneven angles or with minor rotations, and the first infrared camera 410, the second infrared camera 420, and the RGB camera 210 simultaneously capture images of the side of the target object. Rotating the calibration object at uneven angles or with minor rotations may result in the cameras capturing images spanning two sides or only capturing partial views of a single side, and there will be notable discrepancies compared to the first two rounds of rotation, hence this round only serves as a supplement to the previous two rounds. It aims to provide a small number of additional images for correcting laser speckle interference, as well as to serve as effective supplementation in cases where images from the first two rounds are insufficient. The above method for adjusting the target object is only an example of this embodiment, and it is also possible to perform adjustment according to timing requirements, or to configure a plurality of target objects, which is not limited herein.

Further, in an embodiment, referring to FIG. 11, after S910 shown in FIG. 9 or S1010 shown in FIG. 10 is completed, the calibration method further includes but is not limited to the following steps.

At S1110, laser speckle information in images of the third image set is filtered out.

It should be noted that when the infrared dot projector 320 is operating, images captured by the second infrared camera 420 contain laser speckle information. In order to avoid interfering with the calibration, it is necessary to filter it out using denoising techniques. For example, to address multiplicative distortion caused by speckles, noise can be converted into an additive model using natural logarithms during iteration. The image is then converted from the RGB space to the hue lightness saturation (HLS) space, a red color space range is extracted, and then the image is converted back to the RGB space and further converted to the grayscale space for histogram equalization and filtration. Then, angular points are computed to generate a checkerboard image for calibration.

Further, in an embodiment, referring to FIG. 12, after S 1030 shown in FIG. 10 is completed, the calibration method further includes but is not limited to the following steps.

At S1210, calibration parameters are acquired, the calibration parameters include a first calibration parameter of the first infrared camera, a second calibration parameter of the second infrared camera, and a third calibration parameter of the RGB camera.

At S1220, global calibration among the first infrared camera, the second infrared camera and the RGB camera is performed according to the calibration parameters.

It should be noted that after completing the pairwise calibration between the first infrared camera 410 and the RGB camera 210, and between the second infrared camera 420 and the RGB camera 210, global calibration among the three cameras needs to be performed to achieve cooperative operation. Based on this, it is necessary to calculate the calibration parameters respectively, and the calibration parameters usually include intrinsic parameters, distortion coefficients, extrinsic parameters and image scale factors.

It should be noted that the intrinsic parameters and distortion coefficients can be derived by fusing images of the target object captured by each of the three cameras, rotating one or multiple rounds. Those having ordinary skill in the art should be familiar with how to compute the relevant parameters, which will not be further described herein.

It should be noted that the calculation of the extrinsic parameters requires simultaneous capture by all of the three cameras, meaning each camera needs to capture an image of the same stationary target object at the same time. Feature calculation is then performed on each image to compute the extrinsic parameters. This technique is well-known among those having ordinary skill in the art, which will not be further described herein.

It should be noted that the image scale factors represent the differences in the imaging of spatial objects between infrared and RGB images due to discrepancies in the optical centers of the infrared camera and the RGB camera and the difference in focal lengths between infrared and visible light. Therefore, the image scale factors can be derived by comparing the infrared and RGB pixel differences of the 2D calibration images of the side of the target object, thereby achieving dimensional consistency of spatial objects in both infrared and RGB images.

Further, even though dimensional consistency is achieved between the infrared and RGB images, there may still be offsets when transferring the infrared image to the RGB image. By calculating the corresponding pixel differences based on the coordinate positions of the side calibration checkerboard or circular points of the calibration object, as well as the pixel coordinate positions in the infrared and RGB images, the infrared and RGB pixels can be aligned.

Further, referring to FIG. 14, an embodiment of the present disclosure also provides a terminal device 1400, including: a memory 1410, a processor 1420, and a computer program stored in the memory 1410 and executable by the processor 1420.

The processor 1420 and the memory 1410 may be connected by a bus or by other means.

Non-transient software programs and instructions required to realize the calibration method in the above embodiments are stored in the memory 1410, and are configured to implement the calibration method in the above embodiments when executed by the processor 1420, for example, implement the above-described method steps S810 to S830 in FIG. 8, S910 to S930 in FIG. 9, S1010 to S1030 in FIG. 10, S1110 in FIG. 11, and S1210 to S1220 in FIG. 12.

The device embodiments described above are only for illustration. The units described as separate components may or may not be physically separated, that is, the components may be located at one place or distributed to multiple network units. Some or all of the modules can be selected according to actual needs to achieve the purpose of the embodiment.

Furthermore, an embodiment of the present disclosure also provides a computer-readable storage medium storing computer-executable instructions which, when executed by a processor or controller, for example, the processor in the above-mentioned embodiment of the terminal device, can cause the processor to implement the calibration method in the above embodiments, for example, implement the above-described method steps S810 to S830 in FIG. 8, S910 to S930 in FIG. 9, S1010 to S1030 in FIG. 10, S1110 in FIG. 11, and S1210 to S1220 in FIG. 12. It can be understood by those having ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on a computer-readable media, which may include computer-readable storage media (or non-transitory media) and communication media (or transitory media). As well known to those having ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to a random access memory (RAM), a read-only memory (ROM), an electrically erasable programmable read-only memory (EEPROM), a flash memory or another memory technology, a compact disc read-only memory (CD-ROM), a digital versatile disk (DVD) or another optical disk storage, a magnetic cassette, a magnetic tape, magnetic disk storage or another magnetic storage device, or any other medium which can be used to store desired information and can be accessed by a computer. Furthermore, it is well known to those having ordinary skill in the art that communication media typically contain computer-readable instructions, data structures, program modules or other data in a modulated data signal such as a carrier wave or other transmission mechanism, and may include any information transmission media.

Embodiments of the present disclosure include: an RGB component, which includes an RGB camera, a first lens and a first light channel connecting the first lens and the RGB camera; an infrared emission component, which includes an infrared flood illuminator, a second lens and a second light channel connecting the infrared flood illuminator and the second lens, where the second lens is adj acent to the first lens; and an infrared receiving component, which includes a first infrared camera, a third lens and a third light channel connecting the first infrared camera and the third lens, where the third lens is adjacent to the first lens. According to the technical scheme of the embodiment, the RGB camera, the infrared flood illuminator and the first infrared camera can be arranged separately from the lenses, and light propagation is realized through the light channels. This allows for a more compact arrangement of the plurality of lenses beneath the screen, effectively reducing the area which requires special treatments to enhance light transmittance. Consequently, the display effect and user experience of full-screen display are improved.

A detailed description of several implementations of the present disclosure are provided, however, the present disclosure is not limited to the above-mentioned embodiments. Those having ordinary skill in the art can make various equivalent modifications or replacements without departing from the principle of the present disclosure, and these equivalent modifications or replacements are all included in the scope as defined by the appended claims of the present disclosure.

## Claims

1. A three-dimensional, 3D, recognition device, which is arranged beneath a display screen of a terminal device, the 3D recognition device comprising:
a Red Green Blue, RGB, component, which comprises an RGB camera, a first lens and a first light channel connecting the first lens and the RGB camera;
an infrared emission component, which comprises an infrared flood illuminator, a second lens and a second light channel connecting the infrared flood illuminator and the second lens, wherein the second lens is adjacent to the first lens; and
an infrared receiving component, which comprises a first infrared camera, a third lens and a third light channel connecting the first infrared camera and the third lens, wherein the third lens is adjacent to the first lens.

2. The 3D recognition device of claim 1, wherein:
a first reflector is arranged in the second light channel, for reflecting infrared light emitted by the infrared flood illuminator to the second lens, and
a second reflector is arranged in the third light channel, for reflecting light entering through the third lens to the first infrared camera.

3. The 3D recognition device of claim 2, wherein:
the infrared emission component further comprises an infrared dot projector, a fourth lens and a fourth light channel connecting the infrared dot projector and the fourth lens, and the fourth lens is adjacent to the first lens; and
a third reflector is arranged in the fourth light channel, for reflecting infrared light emitted by the infrared dot projector to the fourth lens.

4. The 3D recognition device of claim 3, wherein:
the infrared receiving component further comprises a second infrared camera, a fifth lens and a fifth light channel connecting the second infrared camera and the fifth lens, and the fifth lens is adjacent to the first lens; and
a fourth reflector is arranged in the fifth light channel, for reflecting light entering through the fifth lens to the second infrared camera.

5. A terminal device, comprising:
the 3D recognition device of any one of claims 1 to 4; and
a display screen, wherein the 3D recognition device is arranged beneath the display screen, and an area, corresponding to lenses of the 3D recognition device, of the display screen is a light transmittance enhancement area.

6. A calibration method, which is applied to a three-dimensional, 3D, recognition device, the 3D recognition device comprising a Red Green Blue, RGB, component, an infrared emission component and an infrared receiving component, wherein the RGB component comprises an RGB camera, a first lens and a first light channel connecting the first lens and the RGB camera; the infrared emission component comprises an infrared flood illuminator, a second lens and a second light channel connecting the infrared flood illuminator and the second lens, and the second lens is adjacent to the first lens; the infrared receiving component comprises a first infrared camera, a third lens and a third light channel connecting the first infrared camera and the third lens, and the third lens is adjacent to the first lens; and
the calibration method comprises:
in response to the infrared flood illuminator being in an operational mode, capturing a first image set via the first infrared camera and a second image set via the RGB camera according to a first preset time sequence, wherein the first infrared camera captures different target objects at different times, the RGB camera captures different target objects at different times, and the first infrared camera and the RGB camera capture the same target object at the same time;
performing calibration between the first infrared camera and the infrared flood illuminator according to the first image set; and
fusing images captured at the same time in the first image set and the second image set to obtain a first fused image set, and performing calibration between the RGB camera and the first infrared camera according to the first fused image set.

7. The method of claim 6, wherein the infrared emission component further comprises an infrared dot projector, a fourth lens and a fourth light channel connecting the infrared dot projector and the fourth lens, and the fourth lens is adjacent to the first lens; and
the method further comprises:
in response to the infrared dot projector being in an operational mode, capturing a third image set via the first infrared camera and a fourth image set via the RGB camera according to a second preset time sequence, wherein the first infrared camera captures different target obj ects at different times, the RGB camera captures different target objects at different times, and the first infrared camera and the RGB camera capture the same target object at the same time;
performing calibration between the first infrared camera and the infrared dot projector according to the third image set; and
fusing images captured at the same time in the third image set and the fourth image set to obtain a second fused image set, and performing calibration between the RGB camera and the first infrared camera according to the second fused image set.

8. The method of claim 6, wherein the infrared receiving component further comprises a second infrared camera, a fifth lens and a fifth light channel connecting the second infrared camera and the fifth lens, and the fifth lens is adjacent to the first lens; and
the method further comprises:
in response to the infrared dot projector being in an operational mode, capturing a third image set via the second infrared camera and a fourth image set via the RGB camera according to a second preset time sequence, wherein the second infrared camera captures different target objects at different times, the RGB camera captures different target objects at different times, and the first infrared camera and the RGB camera capture the same target object at the same time;
performing calibration between the second infrared camera and the infrared dot projector according to the third image set; and
fusing images captured at the same time in the third image set and the fourth image set to obtain a second fused image set, and performing calibration between the RGB camera and the second infrared camera according to the second fused image set.

9. The method of claim 7 or claim 8, after capturing the fourth image set via the RGB camera, the method further comprising:
filtering out laser speckle information in images of the third image set.

10. The method of claim 8, after performing calibration between the RGB camera and the second infrared camera according to the second fused image set, the method further comprising:
acquiring calibration parameters which comprises a first calibration parameter of the first infrared camera, a second calibration parameter of the second infrared camera, and a third calibration parameter of the RGB camera; and
performing global calibration among the first infrared camera, the second infrared camera and the RGB camera according to the calibration parameters.

11. A terminal device, comprising: a memory, a processor, and a computer program stored in the memory and executable by the processor, wherein the processor implements the calibration method of any one of claims 6 to 10 when executing the computer program.

12. A computer-readable storage medium storing computer-executable instructions, wherein the computer-executable instructions are utilized to implement the calibration method of any one of claims 6 to 10.
